# FASCICULE DE BREVET EUROPEEN

(11) **EP 4 247 210 B1**
(45) Date de publication et mention de la délivrance du brevet: **25.12.2024**
(21) Numéro de dépôt: 21823975.4
(22) Date de dépôt: 22.11.2021
(51) Int. Cl.: A44B 18/00, B29C 44/12

(54) **PROCÉDÉ DE FABRICATION D'UN DISPOSITIF DE RETENUE ÉTANCHE POUR UNE OPÉRATION DE MOUSSAGE**
VERFAHREN ZUR HERSTELLUNG EINER ABGEDICHTETEN HALTEVORRICHTUNG FÜR EINEN SCHÄUMVORGANG
METHOD FOR MANUFACTURING A SEALED RETAINING DEVICE FOR A FOAMING OPERATION

(30) Priorité: 23.11.2020 FR 2102004
(43) Date de publication de la demande: 27.09.2023
(73) Titulaire: Aplix, 44850 Le Cellier (FR)
(72) Inventeur: TORLAY, Laurent, 44850 LE CELLIER (FR); ROYER, Justine Stéphanie, 44850 LE CELLIER (FR)
(74) Mandataire: Cabinet Beau de Loménie
(86) Numéro de dépôt international: PCT/FR2021/052065
(87) Numéro de publication internationale: WO 2022/106797

(56) Documents cités:
- EP-A1- 1 661 477
- WO-A1-98/05232
- FR-A1- 2 941 645
- KR-B1- 101 744 495

## Description

### Domaine Technique

Le présent exposé concerne un procédé de fabrication d'un dispositif de retenue étanche pour une opération de moussage, notamment un dispositif de retenue muni d'éléments de retenue tels que des crochets, et trouve une application par exemple dans le cadre de garnitures pour des véhicules.

### Technique antérieure

Les systèmes de retenue de type auto agrippant sont communément utilisés pour la fixation de garnitures en mousse, par exemple pour des sièges de véhicules ou des revêtements.

Une problématique récurrente concerne l'intégration et la protection des éléments de retenue dans les garnitures. En effet, l'injection de mousse tend à recouvrir les éléments de retenue les rendant alors inopérants. Différents procédés ont été proposés afin de protéger les éléments de retenue. Cependant, ces différents procédés entrainent des contraintes importantes lors de la fabrication et/ou des limites quant aux formes de bandes d'éléments de retenue pouvant être ainsi réalisées.

Le document WO98/05232 présente ainsi un exemple de dispositif de fixation de garniture et le procédé de fabrication associé. Dans ce document, un revêtement est positionné sur un ruban muni de crochets ; ce revêtement est ensuite découpé et retiré partiellement afin de former un contour continu unique autour d'une zone de crochets. Un tel procédé est cependant contraignant techniquement.

Le présent exposé vise ainsi à répondre au moins partiellement à ces problématiques.

### Exposé de l'invention

La présente invention propose ainsi un procédé de fabrication d'un dispositif de retenue étanche pour une opération de moussage, notamment une opération de moussage d'un siège, lequel procédé comprend les étapes selon lesquelles :
a) on fournit une bobine de ruban, le ruban présentant une face supérieure s'étendant selon une direction longitudinale, ladite face supérieure étant munie d'éléments de retenue et présentant au moins deux cordons primaires de matière au moins partiellement disjoints et s'étendant chacun au moins partiellement selon la direction longitudinale, de sorte que des éléments de retenue soient positionnés entre deux cordons primaires,
b) on déroule selon la direction longitudinale une portion du ruban,
c) on forme des moyens d'étanchéité à la mousse selon une direction transversale sur la face supérieure du ruban, de manière à former avec deux cordons primaires de matière une barrière d'étanchéité à la mousse et à délimiter une zone de la face supérieure du ruban comprenant des éléments de retenue.

Selon un exemple, le procédé comprend une étape de découpe de la portion de ruban, ladite portion de ruban comprenant les moyens d'étanchéité à la mousse. Ladite découpe s'étend par exemple selon une direction parallèle à la direction longitudinale et/ou selon une direction parallèle à la direction transversale.

Selon un exemple, les moyens d'étanchéité comprennent des cordons secondaires de matière, déposés sur la face supérieure du ruban de manière à s'étendre selon une direction transversale, entre deux cordons primaires de matière.

Les cordons secondaires de matière sont formés de manière à ce que chaque extrémité desdits cordons secondaires de matière soit à une distance inférieure ou égale à 1 mm d'un cordon primaire de matière.

Selon un exemple, les moyens d'étanchéité sont formés par un unique cordon secondaire de matière déposé en continu sur la face supérieure du ruban.

Selon un exemple, les moyens d'étanchéité à la mousse comprennent des premiers moyens d'étanchéité à la mousse et des seconds moyens d'étanchéité à la mousse espacés selon la direction longitudinale.

Le dépôt des premiers moyens d'étanchéité et le dépôt des seconds moyens d'étanchéité sont par exemple réalisés simultanément.

Selon un exemple, les moyens d'étanchéité sont formés par découpe d'une portion du ruban selon la direction longitudinale entre deux cordons primaires, et par repli d'une partie du ruban sur lui-même.

La partie du ruban repliée sur lui-même est alors typiquement solidarisée sur la face supérieure du ruban, par exemple par calandrage à chaud et/ou par soudure à ultrasons.

Selon un exemple, le procédé comprend une étape préalable de formation de la bobine de ruban, dans laquelle :
- on fournit un ruban primaire présentant une face supérieure s'étendant selon une direction longitudinale, ladite face supérieure étant munie d'éléments de retenue,
- on forme au moins deux cordons primaires de matière au moins partiellement disjoints et s'étendant chacun selon la direction longitudinale, de sorte que des éléments de retenue soient positionnés entre deux cordons primaires,
- on enroule le ruban primaire de manière à former une bobine de ruban.

Selon un exemple, les cordons primaires de matière présentent une hauteur supérieure ou égale à la hauteur des éléments de retenue, la hauteur étant mesurée selon une direction perpendiculaire à la face supérieure du ruban.

Le présent exposé concerne également un procédé de formation d'un composant de siège, dans lequel :
- on fabrique un dispositif de retenue au moyen du procédé tel que décrit précédemment,
- on identifie une longueur de dispositif de retenue à former,
- on découpe, selon une direction parallèle à la direction transversale, le ruban autour de chaque contour défini par les cordons de matériau, à la longueur définie à l'étape précédente,
- on prélève le dispositif de retenue ainsi réalisé et on le positionne dans un appareillage de moussage, de sorte que la barrière d'étanchéité à la mousse soit au contact d'une surface de l'appareillage de moussage, puis
- on injecte de la mousse pour encapsuler en partie le dispositif de retenue.

Selon un exemple, le procédé comprend une étape dans laquelle on découpe selon une direction parallèle à la direction longitudinale, le ruban autour de chaque contour défini par les cordons de matériau et les moyens d'étanchéité à la mousse, notamment la découpe est réalisée sur au moins un cordon de matériau ou moyen d'étanchéité à la mousse et/ou au voisinage du cordon de matériau ou moyen d'étanchéité à la mousse, par exemple à une distance moyenne du cordon de matériau ou moyen d'étanchéité à la mousse inférieure à 15mm notamment inférieure à 10 mm et supérieure à 0,1 mm. Ladite découpe peut être réalisée en amont ou en aval de l'étape de découpe selon une direction parallèle à la direction transversale.

Selon un exemple, on répète les étapes de fabrication, d'identification, de découpe, de prélèvement et de positionnement pour au moins deux dispositifs de retenue, qui sont positionnés dans un appareil de moussage préalablement à l'étape d'injection.

Selon un exemple, lequel lesdits au moins deux dispositifs de retenue présentent des dimensions selon la direction longitudinale distinctes, typiquement comprises entre 50 mm et 800 mm.

Selon un exemple, le prélèvement du dispositif de retenue est réalisé au moyen d'un bras articulé.

Selon un exemple, le positionnement du dispositif de retenue dans l'appareillage de moussage est réalisé au moyen d'un bras articulé.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 illustre schématiquement un procédé selon un aspect de l'invention.
[Fig. 2] La figure 2 présente une étape du procédé selon l'invention.
[Fig. 3] La figure 3 présente un exemple d'étape du procédé selon l'invention.
[Fig. 4] La figure 4 présente un exemple d'étape du procédé selon l'invention.
[Fig. 5] La figure 5 présente un exemple d'étape du procédé selon l'invention.
[Fig. 6] La figure 6 présente un exemple d'étape du procédé selon l'invention.
[Fig. 7] La figure 7 présente un exemple d'étape du procédé selon l'invention.
[Fig. 8] La figure 8 présente un exemple d'étape du procédé selon l'invention.
[Fig. 9] La figure 9 présente un exemple d'étape du procédé selon l'invention.

Sur l'ensemble des figures, les éléments en commun sont repérés par des références numériques identiques.

### Description des modes de réalisation

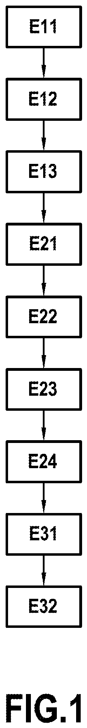

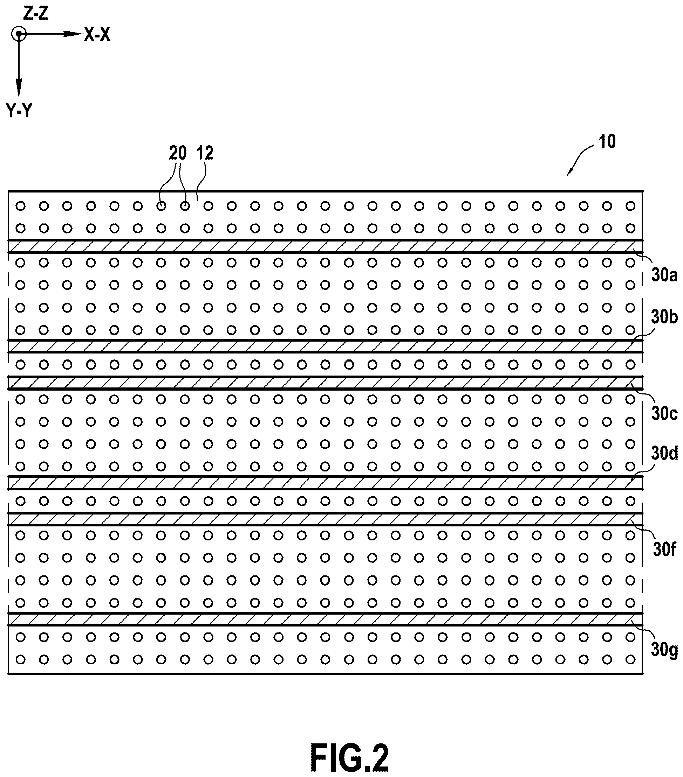

La figure 1 illustre schématiquement un procédé selon un aspect de l'invention. On présente ci-après les différentes étapes, certaines étant décrites en référence aux figures 2 et suivantes.

Le procédé tel que représenté présente dans un premier temps des étapes préalables et/ou optionnelles à l'invention revendiquée en revendication 1 permettant de former une bobine de ruban.

Ces étapes optionnelles comprennent ainsi typiquement une étape E11 de fourniture d'un ruban primaire présentant une face supérieure s'étendant selon une direction longitudinale, ladite face supérieure étant munie d'éléments de retenue.

On réalise ensuite typiquement une étape E12 de formation de cordons primaires de matière au moins partiellement disjoints et s'étendant chacun au moins partiellement selon la direction longitudinale, de sorte que des éléments de retenue soient disposés entre deux cordons primaires.

La figure 2 présente un exemple de ruban sur lequel sont formés de tels cordons primaires. On représente sur cette figure 2 un ruban 10 présentant une face supérieure 12 sensiblement plane et une face inférieure non visible sur cette figure. Le ruban 10 s'étend selon une direction longitudinale X-X. On définit une direction transversale Y-Y, perpendiculaire à la direction longitudinale X-X, et s'étendant dans un plan défini par la face supérieure 12 du ruban 10. On définit également une direction verticale Z-Z, perpendiculaire au plan défini par la direction longitudinale X-X et par la direction transversale Y-Y, c'est-à-dire perpendiculaire à la face supérieure 12 du ruban 10. Le ruban comprend typiquement des fils de trame et des fils de chaine formant un tissé.

La face supérieure 12 du ruban 10 est munie d'éléments de retenue 20. Il peut par exemple s'agir de crochets adaptés pour coopérer avec d'autres crochets ou avec des boucles afin de réaliser une liaison du type auto agrippante. Le ruban 10 peut présenter une base, par exemple issue d'injection et/ou d'extrusion, qui peut être formée d'un seul tenant avec les éléments de retenue 20.

Les éléments de retenue 20 sont typiquement disposés de manière à former des lignes s'étendant selon la direction longitudinale, l'espacement entre deux éléments de retenue 20 successifs selon la direction longitudinale définissant le pas selon la direction longitudinale. Les différentes lignes d'éléments de retenue sont typiquement disposées soit de manière à ce que les éléments de retenue définissent des rangées selon la direction transversale Y-Y, soit en quinconce, c'est-à-dire de sorte que deux lignes successives soient décalées de la moitié du pas selon la direction longitudinale. Les éléments de retenue sont typiquement des crochets.

Comme indiqué, des cordons primaires 30 sont formés sur la face supérieure 12 du ruban 10, par exemple par dépôt de matière sur la face supérieure 12 du ruban 10. Les cordons primaires 30 sont typiquement issus d'extrusion. Les cordons primaires sont typiquement formés d'une matière non poreuse et/ou dépourvue de cellules ouvertes et/ou fermées.

Dans l'exemple illustré à la figure 2, on a représenté 6 cordons primaires 30 formés sur la face supérieure 12 du ruban 10, que l'on désignera respectivement par 30a, 30b, 30c, 30d, 30f et 30g ou plus généralement en ajoutant l'indice a, b, c, d, f, ou g pour désigner le cordon primaire concerné ou une partie de ce dernier.

Dans l'exemple illustré, les cordons primaires sont linéaires, et s'étendent selon la direction longitudinale X-X, de manière à définir des paires de cordons primaires 30 entre lesquelles se trouvent des éléments de retenue 20. Comme on le verra par la suite, on comprend que les cordons 30 ne sont pas nécessairement linéaires ; ils peuvent également présenter une composante selon la direction transversale non nulle.

On réalise ensuite typiquement une étape E13 dans laquelle on enroule le ruban primaire de manière à former une bobine de ruban.

Les cordons primaires 30 ainsi formés sur la face supérieure 12 du ruban 10 ont pour effet de mettre à distances les éléments de retenue 20 de la face supérieure 12 du ruban 10 pour faciliter l'enroulage du ruban 10 sur lui-même et surtout de déroulage de ce dernier et ce sans dégrader ni les éléments de retenue 20 agencés sur la face supérieure 12 ni dégrader la face inférieure du ruban 20.

Suite à la formation de la bobine, on réalise des étapes de fabrication d'un dispositif de retenue.

Dans une étape E21, on fournit la bobine, typiquement la bobine réalisée précédemment lors des étapes E11 à E13.

Lors d'une étape E22, on déroule ensuite une portion du ruban selon la direction longitudinale X-X.

Lors d'une étape E23, on forme ensuite des moyens d'étanchéité à la mousse sur la face supérieure du ruban de manière à former avec deux cordons secondaires 30 de matière une barrière d'étanchéité à la mousse et à délimiter une zone de la face supérieure 12 du ruban 10 comprenant des éléments de retenue 20.

On peut ensuite réaliser une étape de découpe E24 du ruban. En variante, l'étape de découpe E24 peut également être réalisée préalablement à l'étape E23. La découpe peut par exemple être réalisée selon une direction parallèle à la direction transversale.

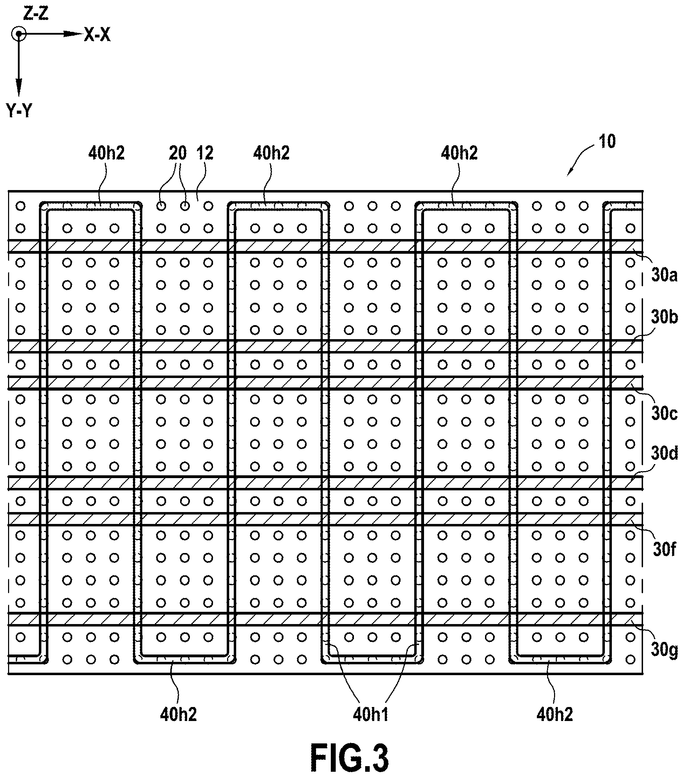

On décrit à présent des exemples de réalisation des étapes E22 à E24 en référence aux figures 3 à 9.

La figure 3 présente un exemple de formation de moyens d'étanchéité à la mousse sur un ruban tel que déjà présenté en référence à la figure 2. Le moyen d'étanchéité 40 est ici un cordon secondaire ondulé qui présente un motif pouvant être régulier ou non, comprenant des portions transversales 40h1 qui s'étendent selon la direction transverse Y-Y de manière à chevaucher les différents cordons primaires, et des portions de liaison 40h2 assurant une continuité de matière du cordon secondaire entre les différentes portions transversales 40h1, lesdites portions de liaison 40h2 pouvant être incurvées et/ou comprendre des segments linéaires.

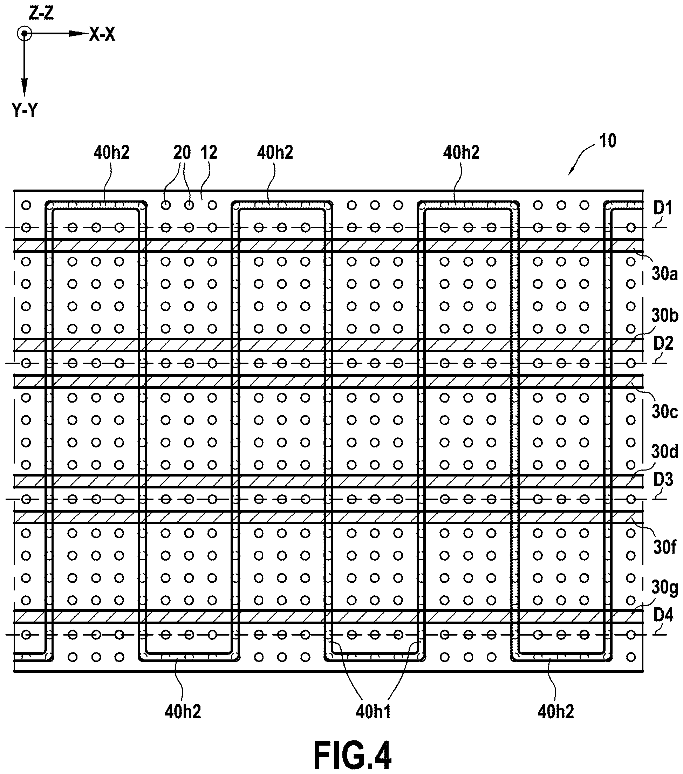

On peut ici découper le ruban 10 selon plusieurs axes de découpe s'étendant selon la direction longitudinale X-X de manière à obtenir des produits distincts. La figure 4 représente schématiquement de telles découpes D1 à D4, symbolisées par des pointillés. Pour chacun de ces produits, on obtient donc un ruban comprenant deux cordons primaires et une pluralité de segments transverses, ici formés par les portions transversales 40h1, qui viennent définir avec les cordons primaires des secteurs d'éléments de retenue qui sont protégés lors de l'étape de surmoulage ou de moussage.

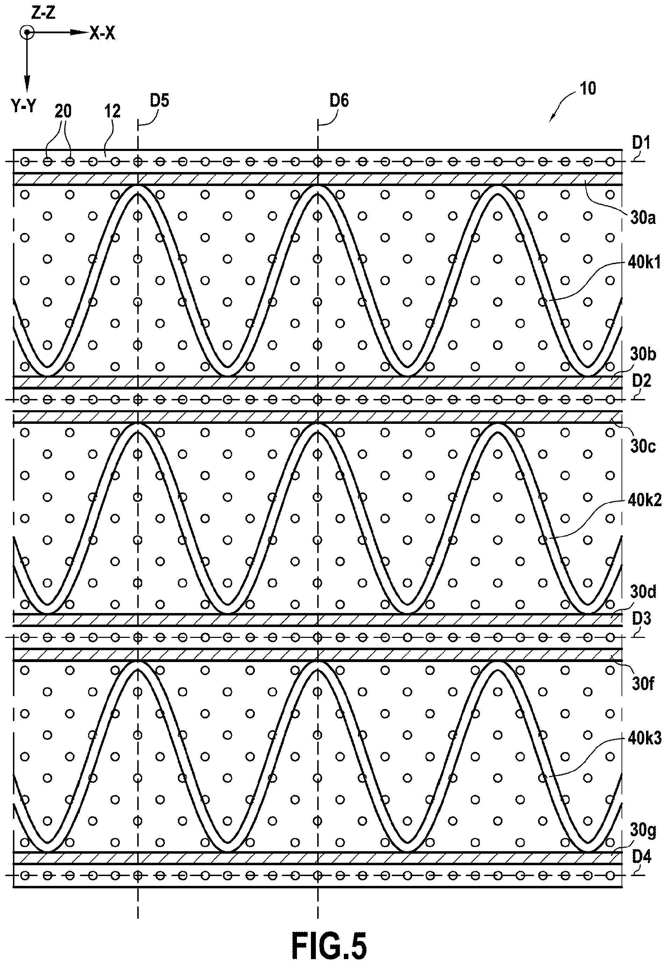

La figure 5 présente une variante de l'exemple déjà présenté en référence aux figures 3 et 4.

Dans ce mode de réalisation, on forme des cordons secondaires ondulés 40k entre deux cordons primaires. Les cordons secondaires ondulés 40k présentent par exemple un tracé du type sinusoïdal entre deux cordons primaires.

Les cordons ondulés 40k viennent au contact des cordons primaires ou à une distance inférieure ou égale à 1mm des cordons primaires aux différents sommets des ondulations. Ainsi, dans cet exemple, on peut définir trois sous-ensembles ; un premier sous ensemble formé par les cordons primaires 30a, 30b et le cordon secondaire 40k1, un second sous ensemble formé par les cordons primaires 30c, 30d et le cordon secondaire 40k2, et un troisième sous ensemble formé par les cordons primaires 30f, 30g et le cordon secondaire 40k3, ces trois sous-ensembles étant séparés par une bande pouvant typiquement comprendre une ou plusieurs lignes d'éléments de retenue 20. Le ruban 10 peut par exemple être découpé selon la direction longitudinale X-X entre les cordons primaires 30b et 30c ainsi que 30d et 30f afin d'obtenir trois produits distincts ayant des formes de bande, et le cas échéant à proximité des cordons primaires 30a et 30g, comme représenté ici par les lignes de découpe D1, D2, D3 et D4. La bande ainsi obtenue présente par exemple une largeur moyenne selon la direction transversale inférieure à 15 mm, typiquement inférieure à 10mm. Cette bande a pour effet d'augmenter la capacité d'ancrage du dispositif de retenu dans la mousse.

Dans ces trois sous-ensembles, les extrémités du cordon secondaire ondulé 40k sont associées par paire avec les cordons primaires 30, pour définir des secteurs d'éléments de retenue qui sont protégés lors de l'étape de surmoulage ou de moussage.

On peut également réalises des découpes selon la direction transverse Y-Y, comme symbolisé sur la figure par les lignes de découpe D5 et D6. Comme on le voit, les cordons primaires et les cordons secondaires ondulés définissent alors des zones encadrant les éléments de retenue et les protégeant lors de l'étape de surmoulage ou de moussage dès lors que l'écart entre les lignes de découpe D5 et D6 est suffisant, ici par exemple supérieur à l'écart entre deux sommets consécutifs des ondulations. Plus généralement, les découpes peuvent être réalisées selon la direction longitudinale et/ou selon la direction transversale, ou encore selon une direction oblique, ayant une composante longitudinale et une composante transversale non nulle.

En variante, les cordons primaires peuvent être formés d'une largeur suffisante pour permettre une découpe dans le cordon primaire. Ainsi, les cordons primaires 30b et 30c peuvent être regroupés en un cordon primaire unique, de même pour les cordons primaires 30d et 30f dès lors que les cordons primaires présentent une largeur suffisante pour conserver une fonction de barrière malgré la découpe réalisée.

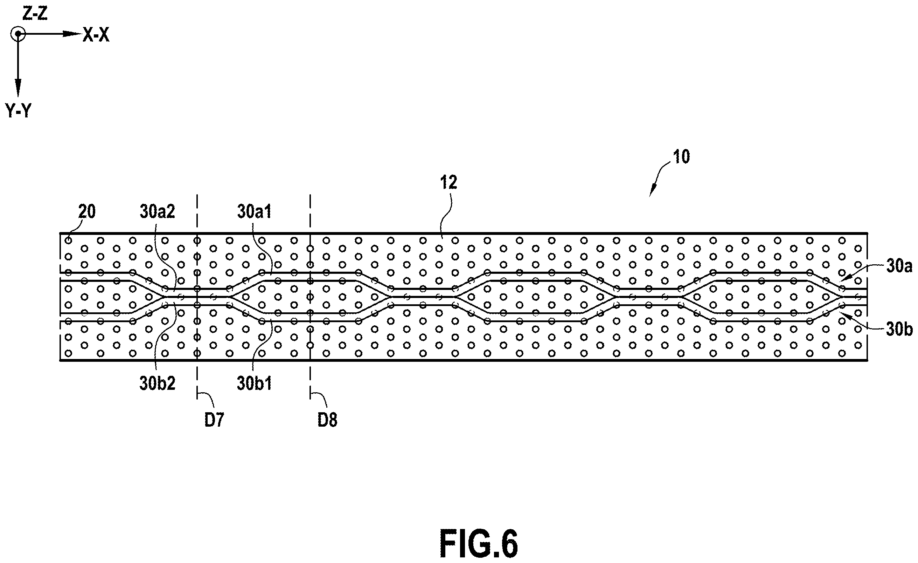

La figure 6 présente une autre variante.

Dans ce mode de réalisation, les cordons primaires formés sur la face supérieure 12 du ruban 10 ne sont pas linéaires. Dans l'exemple illustré, les cordons primaires 30 sont agencés par paires, chaque paire définissant un ou plusieurs contours. Sur la figure 6, on représente deux cordons primaires 30a et 30b qui sont ici symétriques ou sensiblement symétriques, et présentent un profil non linéaire selon la direction longitudinale. Par profil, on entend la trajectoire du cordon primaires 30 considéré sur la face supérieure 12 du ruban 10, typiquement la projection sur le plan défini par la direction longitudinale X-X et la direction transversale Z-Z d'une courbe passant par le centre des sections du cordon primaires 30 considéré.

Ainsi, les cordons primaires 30a et 30b présentent des portions 30a1 et 30b1 disjointes et éloignées les unes des autres, et des portions 30a2 et 30b2 au niveau desquelles les cordons primaires 30a et 30b sont en contact. Ainsi, deux portions 30a2 successives définissent une zone de la face supérieure 12 du ruban 10 comprenant des éléments de retenue 20.

On peut réaliser des découpes, par exemple comme symbolisé par les pointillés sur la figure 6, qui représentent deux découpes D7 et D8 selon la direction transverse Y-Y. En fonction de l'emplacement souhaité pour les découpes, on forme les moyens d'étanchéité à la mousse de manière à délimiter des zones comprenant des éléments de retenue et isolées lors de l'opération de moussage. A titre d'exemple, en considérant l'exemple illustré sur la figure 6, on peut former un moyen d'étanchéité à la mousse au niveau de la découpe D8, ce qui définit ainsi une zone délimitée par le moyen d'étanchéité ainsi formé, et les deux cordons primaires 30a et 30b. En variante de réalisation, la découpe selon la direction longitudinale et/ou selon la direction transversale peut être réalisée selon différents types et motifs de découpe bien connus, par exemple une découpe droite comme représenté sur les figures ou encore un autre type de découpe, par exemple sous la forme linéaire d'un « < » ou « > » ou en formes d'ondulations ou encore sous une forme surfacique d'un ou plusieurs triangles ou autres formes géométriques, par exemple sous une forme générale d'hyperbole.

Plus généralement, on voit ici que les cordons primaires 30 formés sur la face supérieure 12 du ruban 10 s'étendent généralement selon la direction longitudinale, mais peuvent également présenter une composante transversale non nulle, et ne sont donc pas nécessairement linéaires.

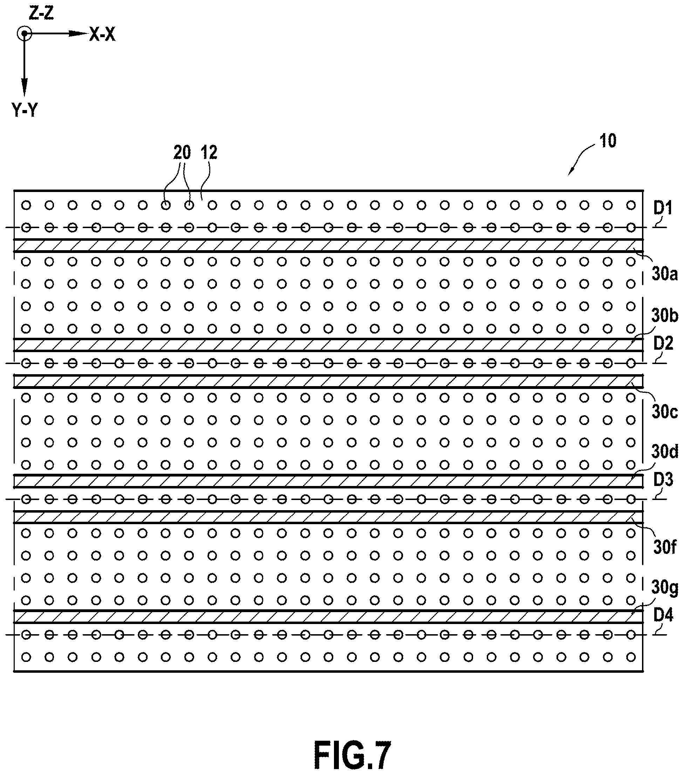

On décrit à présente une variante pour la formation des moyens d'étanchéité à la mousse en référence aux figures 7 à 9.

On considère ici un ruban tel que déjà présenté en référence à la figure 2.

On découpe le ruban selon la direction longitudinale, de manière à former plusieurs sous ensembles, comme déjà décrit précédemment. Dans l'exemple illustré sur la figure 7, on réalise 4 découpes longitudinales, D1 à D4 pour former 3 sous ensembles identiques ou sensiblement identiques.

On réalise ensuite des découpes D11, D12, D13 et D14 de portions du ruban 10, ici à deux extrémités du ruban 10 selon la direction longitudinale. Les découpes D11 à D14 sont ici formées selon la direction longitudinale, typiquement le long des cordons primaires 30a et 30b, et viennent former des languettes de matière aux extrémités du ruban 10. Selon un exemple, la longueur de ces découpes est comprise entre 0,1mm et 15mm, plus particulièrement entre 0,1mm et 10mm encore plus particulièrement entre 1mm et 10mm.

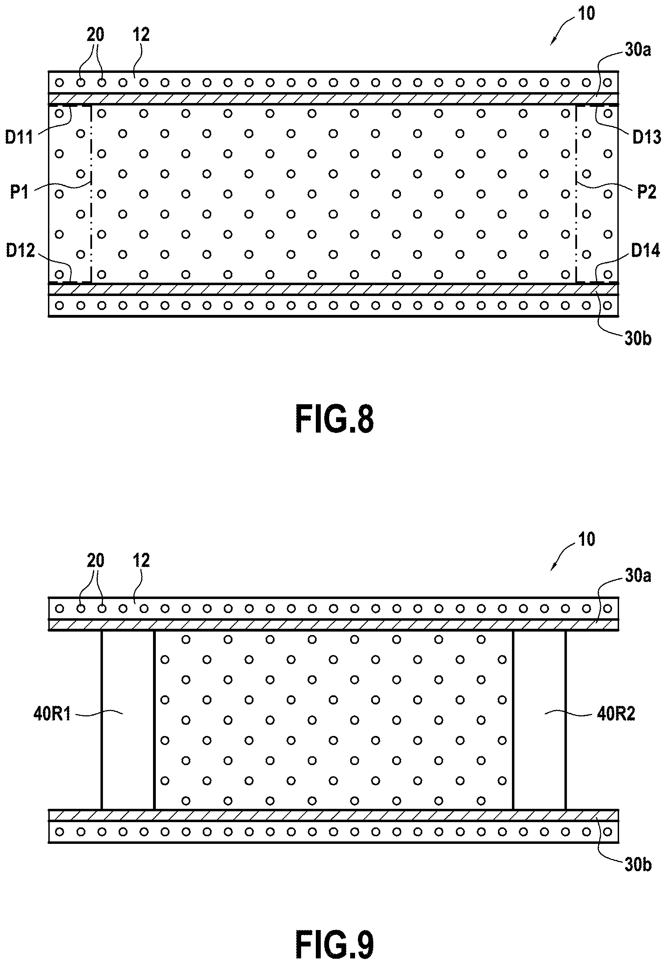

Suite à l'étape de découpe, on va ensuite replier la partie découpe du ruban sur lui-même. On représente sur la figure 8 les lignes de pli P1 et P2 par des traits discontinus. Les languettes du ruban 10 délimitées par les découpes D11 à D14 et les lignes de pli P1 et P2 sont ainsi repliées sur la face supérieure 12 du ruban 10, et le cas échéant solidarisées sur la face supérieure, par exemple par collage, calandrage à chaud et/ou par soudure à ultrasons. La figure 9 représente le ruban avec ces portions repliées sur elles-mêmes désignées par les références 40R1 et 40R2.

Les portions du ruban ainsi repliées forment des surépaisseurs sur la face supérieure 12 du ruban 10, qui réalisent ici une fonction de moyens d'étanchéité à la mousse. Dans l'exemple illustré, les deux portions repliées 40R1 et 40R2 délimitent avec les cordons primaires 30a et 30b une zone comprenant des éléments de retenue 20 qui sera étanche lors d'opérations de moussage. Ces surépaisseurs ont par exemple une épaisseur équivalente à celles des cordons primaires 30 pour assurer une bonne étanchéité à la mousse.

On comprend donc que dans les différents modes de réalisation, les cordons primaires 30 et les cordons secondaires 40 ou les portions repliées 40R forment des moyens d'étanchéité à la mousse. Les cordons primaires 30 sont formés préalablement à la mise du ruban 10 sous forme de bobine, et à la réalisation des cordons secondaires 40 et/ou des portions repliées 40R.

On comprend que les différents modes de réalisation peuvent être associés et combinées entre eux. Il est ainsi possible de combiner des moyens d'étanchéité à la mousse formés par dépôt de matière et des moyens d'étanchéité à la mousse formés par découpe et repli du ruban sur un même produit.

Suite à ces différentes étapes, on peut par exemple utiliser le dispositif de retenue ainsi réalisé pour la formation d'un composant par exemple pour un siège de véhicule ou plus généralement pour un élément comprenant de la mousse et des éléments de retenue. On identifie alors le cas échéant la longueur du dispositif de retenue à former, et on découpe le ruban autour de chaque contour défini par les cordons de matériau et les moyens d'étanchéité à la mousse, typiquement selon une direction parallèle à la direction transversale. Cette découpe peut être réalisée avant ou après l'étape de découpe (E24) réalisée lors de la fabrication du dispositif de retenue.

Selon un exemple, on découpe selon une direction parallèle à la direction longitudinale, le ruban 10 autour de chaque contour défini par les cordons 30 de matériau et les moyens d'étanchéité 40 à la mousse, notamment la découpe est réalisée sur au moins un cordon 30 de matériau ou moyen d'étanchéité 40 à la mousse et/ou au voisinage du cordon 30 de matériau ou moyen d'étanchéité 40 à la mousse, par exemple à une distance moyenne du cordon 30 de matériau ou moyen d'étanchéité 40 à la mousse inférieure à 15mm notamment inférieure à 10 mm et supérieure à 0,1 mm.

On peut ainsi typiquement réaliser une étape E31 dans laquelle on prélève ou on se saisit du dispositif de retenue réalisé précédemment, et on le positionne dans un appareillage ou dispositif de moussage ou d'injection, de sorte que la barrière d'étanchéité à la mousse soit au contact d'une surface de l'appareillage ou dispositif de moussage. La manipulation du dispositif est typiquement réalisée au moyen d'un bras articulé.

On note ici que ces opérations peuvent être répétées plusieurs fois, de manière à positionner un ou plusieurs dispositifs de retenue dans un appareillage ou dispositif de moussage ou d'injection. Les différents dispositifs de moussage ainsi positionnés peuvent présenter des longueurs identiques ou distinctes, typiquement comprises entre 50 mm et 800mm, la longueur étant la dimension mesurée selon la direction longitudinale.

On peut ensuite par exemple réaliser une étape E32 de moussage, c'est-à-dire une étape d'injection de mousse pour venir encapsuler au moins partiellement le dispositif de retenue. Selon un exemple, le matériau, typiquement de la mousse, est injecté au moins en majorité du côté de la face inférieure du ruban 10. La matière va ensuite venir entourer le ruban 10 et recouvrir partiellement sa face supérieure, les moyens d'étanchéité à la mousse et les cordons primaires jouant alors leur rôle de barrière pour préserver des zones de la face supérieure 12 du ruban 10 dans lesquelles les éléments de retenue 20, typiquement les crochets, ne sont pas recouverts par la mousse et demeurent ainsi fonctionnels à l'issue de l'opération de moussage.

Le procédé tel que proposé permet de réaliser et/ou de finaliser le dispositif de retenue obtenue au plus près du besoin de l'opération de moussage en utilisant qu'un seul type de bobine pour réaliser un ou plusieurs dispositifs de retenue ayant des dimensions différentes, par exemple des longueurs différentes, adaptées à chaque positions prédéfinies dans l'appareillage de moussage.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de fabrication d'un dispositif de retenue étanche pour une opération de moussage, notamment une opération de moussage d'un siège, lequel procédé comprend les étapes selon lesquelles :
a) on fournit (E21) une bobine de ruban, le ruban (10) présentant une face supérieure (12) s'étendant selon une direction longitudinale (X-X), ladite face supérieure étant munie d'éléments de retenue (20) et présentant au moins deux cordons primaires (30) de matière au moins partiellement disjoints et s'étendant chacun au moins partiellement selon la direction longitudinale (X-X), de sorte que des éléments de retenue (20) soient positionnés entre deux cordons primaires (30),
b) on déroule (E22) selon la direction longitudinale une portion du ruban (10),
c) on forme (E23) des moyens d'étanchéité (40) à la mousse au moins partiellement selon une direction transversale (Y-Y) sur la face supérieure (12) du ruban (10), de manière à former avec deux cordons primaires (30) de matière une barrière d'étanchéité à la mousse et à délimiter une zone de la face supérieure (12) du ruban (10) comprenant des éléments de retenue (20).

2. Procédé selon la revendication 1, comprenant une étape de découpe (E24) de la portion de ruban (10), laquelle portion de ruban comprenant les moyens d'étanchéité à la mousse.

3. Procédé selon l'une des revendications 1 ou 2, dans lequel les moyens d'étanchéité (30) comprennent des cordons secondaires de matière, déposés sur la face supérieure (12) du ruban (10) de manière à s'étendre selon une direction transversale, entre deux cordons primaires (30) de matière.

4. Procédé selon la revendication 3, dans lequel les cordons secondaires de matière sont formés de manière à ce que chaque extrémité desdits cordons secondaires de matière soit à une distance inférieure ou égale à 1mm d'un cordon primaire de matière.

5. Procédé selon l'une des revendications 1 à 4, dans lequel les moyens d'étanchéité (30) sont formés par un unique cordon secondaire de matière déposé en continu sur la face supérieure (12) du ruban (10).

6. Procédé selon l'une des revendications 1 à 5, dans lequel les moyens d'étanchéité à la mousse comprennent des premiers moyens d'étanchéité à la mousse et des seconds moyens d'étanchéité à la mousse espacés selon la direction longitudinale (X-X).

7. Procédé selon la revendication 6, dans lequel le dépôt des premiers moyens d'étanchéité et le dépôt des seconds moyens d'étanchéité sont réalisés simultanément.

8. Procédé selon l'une des revendications 1 ou 2 ou 6 ou 7, dans lequel les moyens d'étanchéité sont formés par découpe d'une portion du ruban selon la direction longitudinale (X-X) entre deux cordons primaires (30), et par repli d'une partie du ruban (10) sur lui-même.

9. Procédé selon la revendication 8, dans lequel la partie du ruban (10) repliée sur lui-même est solidarisée sur la face supérieure (12) du ruban (10).

10. Procédé selon la revendication 9, dans lequel la solidarisation est réalisée par calandrage à chaud et/ou par soudure à ultrasons.

11. Procédé selon l'une des revendications 1 à 10, comprenant une étape préalable de formation de la bobine de ruban, dans laquelle :
- on fournit (E11) un ruban primaire présentant une face supérieure s'étendant selon une direction longitudinale (X-X) , ladite face supérieure étant munie d'éléments de retenue (20),
- on forme (E12) au moins deux cordons primaires (30) de matière au moins partiellement disjoints et s'étendant chacun selon la direction longitudinale (X-X), de sorte que des éléments de retenue (20) soient positionnés entre deux cordons,
- on enroule (E13) le ruban primaire de manière à former une bobine de ruban (10).

12. Procédé selon la revendication 11, dans lequel les cordons primaires (30) de matière présentent une hauteur supérieure ou égale à la hauteur des éléments de retenue (20), la hauteur étant mesurée selon une direction perpendiculaire à la face supérieure (12) du ruban (10).

13. Procédé de formation d'un composant de siège, dans lequel :
- on fabrique un dispositif de retenue au moyen du procédé selon l'une des revendications précédentes,
- on identifie une longueur de dispositif de retenue à former,
- on découpe, selon une direction parallèle à la direction transversale, le ruban (10) autour de chaque contour défini par les cordons (30) de matériau, à la longueur définie à l'étape précédente,
- on prélève (E31) le dispositif de retenue ainsi réalisé et on le positionne dans un appareillage de moussage, de sorte que la barrière d'étanchéité à la mousse soit au contact d'une surface de l'appareillage de moussage, puis
- on injecte (E32) de la mousse pour encapsuler en partie le dispositif de retenue.

14. Procédé selon la revendication 13, comprenant une étape dans laquelle on découpe selon une direction parallèle à la direction longitudinale, le ruban (10) autour de chaque contour défini par les cordons (30) de matériau et les moyens d'étanchéité (40) à la mousse, notamment la découpe est réalisée sur au moins un cordon (30) de matériau ou moyen d'étanchéité (40) à la mousse et/ou au voisinage du cordon (30) de matériau ou moyen d'étanchéité (40) à la mousse, par exemple à une distance moyenne du cordon (30) de matériau ou moyen d'étanchéité (40) à la mousse inférieure à 15mm notamment inférieure à 10 mm et supérieure à 0,1mm.

15. Procédé selon l'une des revendications 13 ou 14, dans lequel on répète les étapes de fabrication, d'identification, de découpe, de prélèvement et de positionnement pour au moins deux dispositifs de retenue, qui sont positionnés dans un appareil de moussage préalablement à l'étape d'injection.

16. Procédé selon la revendication 15, dans lequel lesdits au moins deux dispositifs de retenue présentent des dimensions selon la direction longitudinale distinctes, typiquement comprises entre 50 mm et 800 mm.

17. Procédé selon l'une des revendications 13 à 16, dans lequel le prélèvement du dispositif de retenue est réalisé au moyen d'un bras articulé.

18. Procédé selon l'une des revendications 13 à 17, dans lequel le positionnement du dispositif de retenue dans l'appareillage de moussage est réalisé au moyen d'un bras articulé.

## Patentansprüche

1. Verfahren zur Herstellung einer abgedichteten Haltevorrichtung für einen Schäumvorgang, insbesondere einen Schäumvorgang eines Sitzes, wobei das Verfahren die folgenden Schritte umfasst, gemäß denen:
a) eine Bandspule bereitgestellt (E21) wird, wobei das Band (10) eine Oberseite (12) aufweist, die sich in einer Längsrichtung (X-X) erstreckt, wobei die Oberseite mit Halteelementen (20) versehen ist und mindestens zwei primäre Materialstränge (30) aufweist, die zumindest teilweise lose sind und sich jeweils zumindest teilweise in der Längsrichtung (X- X) erstrecken, so dass Halteelemente (20) zwischen zwei primären Strängen (30) positioniert sind,
b) ein Abschnitt des Bandes (10) in Längsrichtung abgewickelt (E22) wird,
c) Schaumdichtungsmittel (40) zumindest teilweise in Querrichtung (Y-Y) auf der Oberseite (12) des Bandes (10) gebildet (E23) werden, so dass mit zwei primären Materialsträngen (30) eine Schaumdichtbarriere gebildet wird und ein Bereich der Oberseite (12) des Bandes (10) begrenzt wird, der Halteelemente (20) umfasst.

2. Verfahren nach Anspruch 1, umfassend einen Schneideschritt (E24) des Bandabschnitts (10), wobei der Bandabschnitt die Schaumdichtungsmittel umfasst.

3. Verfahren nach einem der Ansprüche 1 oder 2, wobei die Dichtungsmittel (30) sekundäre Materialstränge umfassen, die auf der Oberseite (12) des Bandes (10) derart aufgebracht sind, dass sie sich in einer Querrichtung zwischen zwei primären Materialsträngen (30) erstrecken.

4. Verfahren nach Anspruch 3, wobei die sekundären Materialstränge derart ausgebildet sind, dass jedes Ende der sekundären Materialstränge in einem Abstand von unter oder gleich 1 mm von einem primären Materialstrang ist.

5. Verfahren nach einem der Ansprüche 1 bis 4, wobei die Dichtungsmittel (30) durch einen einzelnen sekundären Materialstrang gebildet werden, der kontinuierlich auf die Oberseite (12) des Bandes (10) aufgebracht ist.

6. Verfahren nach einem der Ansprüche 1 bis 5, wobei die Schaumdichtungsmittel erste Schaumdichtungsmittel und zweite Schaumdichtungsmittel umfassen, die in der Längsrichtung (X-X) voneinander beabstandet sind.

7. Verfahren nach Anspruch 6, wobei das Aufbringen der ersten Dichtungsmittel und das Aufbringen der zweiten Dichtungsmittel gleichzeitig durchgeführt wird.

8. Verfahren nach einem der Ansprüche 1 oder 2 oder 6 oder 7, wobei die Dichtungsmittel gebildet werden, indem ein Abschnitt des Bandes in Längsrichtung (X-X) zwischen zwei primären Strängen (30) abgeschnitten und ein Teil des Bandes (10) auf sich selbst gefaltet wird.

9. Verfahren nach Anspruch 8, wobei der auf sich selbst gefaltete Teil des Bandes (10) fest mit der Oberseite (12) des Bandes (10) verbunden wird.

10. Verfahren nach Anspruch 9, wobei die feste Verbindung durch Heißkalandrieren und/oder Ultraschallschweißen hergestellt wird.

11. Verfahren nach einem der Ansprüche 1 bis 10, umfassend einen vorherigen Schritt des Bildens der Bandspule, wobei:
- ein Primärband bereitgestellt (E11) wird, das eine Oberseite aufweist, die sich in einer Längsrichtung (X-X) erstreckt, wobei die Oberseite mit Halteelementen (20) versehen ist,
- zumindest zwei primäre Materialstränge (30) gebildet (E12) werden, die zumindest teilweise lose sind und sich jeweils in der Längsrichtung (X-X) erstrecken, so dass Halteelemente (20) zwischen zwei Strängen positioniert werden,
- das Primärband derart aufgewickelt (E13) wird, dass eine Bandspule (10) gebildet wird.

12. Verfahren nach Anspruch 11, wobei die primären Materialstränge (30) eine Höhe aufweisen, die größer oder gleich der Höhe der Halteelemente (20) ist, wobei die Höhe in einer Richtung senkrecht zur Oberseite (12) des Bandes (10) gemessen wird.

13. Verfahren zum Bilden einer Sitzkomponente, wobei:
- eine Haltevorrichtung mittels des Verfahrens nach einem der vorhergehenden Ansprüche hergestellt wird,
- eine Länge der zu formenden Haltevorrichtung ermittelt wird,
- das Band (10) in einer Richtung parallel zur Querrichtung um jede durch die Materialstränge (30) definierte Kontur herum auf die im vorherigen Schritt definierte Länge zugeschnitten wird,
- die derart hergestellte Haltevorrichtung entnommen (E31) und in einer Schäumvorrichtung positioniert wird, so dass die Schaumdichtbarriere eine Oberfläche der Schäumvorrichtung berührt, und dann
- Schaum eingespritzt (E32) wird, um die Haltevorrichtung teilweise einzukapseln.

14. Verfahren nach Anspruch 13, umfassend einen Schritt, in dem in einer Richtung parallel zur Längsrichtung das Band (10) um jede durch die Materialstränge (30) und die Schaumdichtungsmittel (40) definierte Kontur herum ausschneidet, wobei insbesondere das Schneiden an mindestens einem Materialstrang (30) oder Schaumdichtungsmittel (40) und/oder in der Nähe des Materialstrangs (30) oder Schaumdichtungsmittel (40) erfolgt, beispielsweise in einem mittleren Abstand von dem Materialstrang (30) oder dem Schaumdichtungsmittel (40) von weniger als 15 mm, insbesondere weniger als 10 mm und über 0,1 mm.

15. Verfahren nach einem der Ansprüche 13 oder 14, wobei die Schritte des Herstellens, Ermittelns, Schneidens, Entnehmens und Positionierens für mindestens zwei Haltevorrichtungen wiederholt werden, die vor dem Schritt des Einspritzens in einer Schäumvorrichtung positioniert werden.

16. Verfahren nach Anspruch 15, wobei die mindestens zwei Haltevorrichtungen unterschiedliche Abmessungen in Längsrichtung aufweisen, die typischerweise zwischen 50 mm und 800 mm liegen.

17. Verfahren nach einem der Ansprüche 13 bis 16, wobei die Entnahme der Haltevorrichtung mittels eines Gelenkarms erfolgt.

18. Verfahren nach einem der Ansprüche 13 bis 17, wobei die Positionierung der Haltevorrichtung in der Schäumvorrichtung mittels eines Gelenkarms erfolgt.

## Claims

1. A method for manufacturing a sealed retaining device for a foaming operation, in particular an operation of foaming a seat, which method comprises the steps according to which:
a) a ribbon spool is provided (E21), the ribbon (10) having an upper face (12) extending along a longitudinal direction (X-X), said upper face being provided with retaining elements (20) and having at least two primary cords (30) of material at least partially disjointed and each extending at least partially along the longitudinal direction (X-X), so that retaining elements (20) are positioned between two primary cords (30),
b) a portion of the ribbon (10) is unwound (E22) along the longitudinal direction,
c) foam sealing means (40) are formed (E23) at least partially along a transverse direction (Y-Y) on the upper face (12) of the ribbon (10), such as to form with two primary cords (30) of material a foam sealing barrier and to delimit an area of the upper face (12) of the ribbon (10) comprising retaining elements (20).

2. The method according to claim 1, comprising a step of cutting (E24) the ribbon portion (10), which ribbon portion comprising the foam sealing means.

3. The method according to any of claims 1 or 2, wherein the sealing means (30) comprise secondary cords of material, deposited on the upper face (12) of the ribbon (10) so as to extend along a transverse direction, between two primary cords (30) of material.

4. The method according to claim 3, wherein the secondary cords of material are formed so that each end of said secondary cords of material is at a distance less than or equal to 1 mm from a primary cord of material.

5. The method according to any of claims 1 to 4, wherein the sealing means (30) are formed by a single secondary cord of material deposited continuously on the upper face (12) of the ribbon (10).

6. The method according to any of claims 1 to 5, wherein the foam sealing means comprise first foam sealing means and second foam sealing means spaced apart along the longitudinal direction (X-X).

7. The method according to claim 6, wherein the deposition of the first sealing means and the deposition of the second sealing means are carried out simultaneously.

8. The method according to any of claims 1 or 2 or 6 or 7, wherein the sealing means are formed by cutting a portion of the ribbon along the longitudinal direction (X-X) between two primary cords (30), and by folding a part of the ribbon (10) on itself.

9. The method according to claim 8, wherein the part of the ribbon (10) folded on itself is secured to the upper face (12) of the ribbon (10).

10. The method according to claim 9, wherein the securing is carried out by hot calendering and/or by ultrasonic welding.

11. The method according to any of claims 1 to 10, comprising a prior step of forming the ribbon spool, wherein:
- a primary ribbon having an upper face extending along a longitudinal direction (X-X) is provided (E11), said upper face being provided with retaining elements (20),
- at least two primary cords (30) of material at least partially disjoined and each extending along the longitudinal direction (X-X) are formed (E12), so that retaining elements (20) are positioned between two cords,
- the primary ribbon of material is wound (E13) so as to form a ribbon spool (10).

12. The method according to claim 11, wherein the primary cords (30) of material have a height greater than or equal to the height of the retaining elements (20), the height being measured along a direction perpendicular to the upper face (12) of the ribbon (10).

13. The method for forming a seat component, wherein:
- a retaining device is manufactured using the method according to any of the preceding claims,
- a retaining device length to be formed is identified,
- the ribbon (10) is cut along a direction parallel to the transverse direction around each contour defined by the cords (30) of material, at the length defined in the previous step,
- the retaining device thus made is removed (E31) and positioned in a foaming appliance, so that the foam sealing barrier is in contact with a surface of the foaming appliance, then
- foam is injected (E32) to partly encapsulate the retaining device.

14. The method according to claim 13, comprising a step in which the ribbon (10) is cut along a direction parallel to the longitudinal direction around each contour defined by the cords (30) of material and the foam sealing means (40), in particular the cutting is carried out on at least one cord (30) of material or foam sealing means (40) and/or in the vicinity of the cord (30) of material or foam sealing means (40), for example at an average distance from the cord (30) of material or foam sealing means (40) of less than 15 mm, in particular less than 10 mm and greater than 0.1 mm.

15. The method according to any of claims 13 or 14, wherein the manufacturing, identification, cutting, removal and positioning steps are repeated for at least two retaining devices, which are positioned in a foaming apparatus prior to the injection step.

16. The method according to claim 15, wherein said at least two retaining devices have distinct dimensions along the longitudinal direction, typically comprised between 50 mm and 800 mm.

17. The method according to any of claims 13 to 16, wherein the removal of the retaining device is carried out by means of an articulated arm.

18. The method according to any of claims 13 to 17, wherein the positioning of the retaining device in the foaming appliance is carried out by means of an articulated arm.
